(19) **Europäisches Patentamt / European Patent Office / Office européen des brevets**

(11) **EP 1 898 327 B1**

(12) # EUROPEAN PATENT SPECIFICATION

(45) Date of publication and mention
of the grant of the patent:
**06.11.2013 Bulletin 2013/45**

(51) Int Cl.:
***G06F 17/50*** (2006.01)     ***G06T 19/00*** (2011.01)

(21) Application number: **07253462.1**

(22) Date of filing: **31.08.2007**

(54) **Part identification image processor, program for generating part identification image, and recording medium storing the same**

Bildprozessor zur Teileidentifikation, Programm zur Erzeugung eines Teileidentifikationsbildes und Aufzeichnungsmedium zu deren Speicherung

Processeur d'image à identification partielle, programme de génération d'image à identification partielle, et support d'enregistrement stockant celui-ci

(84) Designated Contracting States:
**DE FR GB**

(30) Priority: **07.09.2006 JP 2006242561**

(43) Date of publication of application:
**12.03.2008 Bulletin 2008/11**

(73) Proprietor: **Ricoh Company, Ltd.**
**Tokyo 143-8555 (JP)**

(72) Inventors:
• **Naoyuki, Satoh**
**Tokyo 143-8555 (JP)**

• **Masaaki, Kagawa**
**Tokyo 143-8555 (JP)**

(74) Representative: **Leeming, John Gerard**
**J A Kemp**
**14 South Square**
**Gray's Inn**
**London WC1R 5JJ (GB)**

(56) References cited:
**EP-A- 1 304 657      EP-A- 1 638 027**
**EP-A- 1 742 181      EP-A- 1 821 253**
**WO-A-97/22952      WO-A-2006/058292**
**FR-A- 2 712 999      US-A- 5 467 293**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention generally relates to a part identification image processor, a program for generating a part identification image, and a recording medium storing the program.

In recent years, computer performances and technology have been advanced and various image contents are widely used. For example, an industrial product manufacturing company may create an image of an in-house product and use the image as a content of electronic media, for example, a parts catalog, a service manual, etc.

In general, an industrial product (e.g., mechanical product, an appliance, etc.) includes a plurality of component parts. It is often necessary to identify a component part in the product when viewing the image of the product.

An exploded diagram of the product may be prepared so that the component parts are identified in the image of the product. In the exploded diagram, a part identification codes may be positioned near each component part to identify the component part.

However, in the above method, it is difficult to understand a state of the product being assembled from the component parts and to identify components parts assembled around an arbitrary part.

To cope with the above problem, a method to extract a component part from a three-dimensional (3D) product model on a CAD (computer aided design) system loading information of the 3D product model has been proposed. In the method, a user may extract an arbitrary component part by specifying a closed 3D space including the component part.

EP 1 304 657 A2 discloses an object display system which stores shape data of a plurality of parts which are minimum disassembling units of a product and assembly structure data defining the relationships between the parts in the assembly.

FR 2 712 999 A1 discloses a method and system for producing a printed document including drawings that stores drawings of elementary objects and virtual objects corresponding to complex objects which are made up of an identification code and a schedule including identifiers of the elementary objects.

EP 1 742 181 A2 discloses a parts selecting apparatus that stores, for each part in a complex model, an image of the entire model with the parts highlighted, an image of each part and boundary information relating to the boundaries between the area occupied by the part and the surrounding areas in the image of the entire model.

EP 1 821 253 A discloses a parts catalog system which stores a database of three-dimensional model data for parts and/or units, units being groups of parts and part structure data which may include part name, a use, a related unit name and/or related product name.

The present invention provides a part identification image processor and a method of generating a parts catalog as defined in the appended claims.

A more complete appreciation of the disclosure and many of the attendant advantages thereof will be readily obtained following detailed description when considered in connection with the accompanying drawings, wherein:

FIG. 1 is a block diagram illustrating a computer system configured by a program as an exemplary embodiment of a part identification image processor;

FIG. 2 is a flowchart of a computer system configured by a program as an exemplary embodiment of a part identification image processor;

FIG. 3 is a schematic diagram illustrating visual point information;

FIG. 4 is a diagram illustrating projection of apexes of a 3D model;

FIG. 5 is a flowchart of a procedure to obtain combinations of smallest X and Y coordinates and largest X and Y coordinates;

FIG. 6 is a schematic diagram illustrating part position information;

FIG. 7 is an example image data for a parts catalog; and

FIG. 8 is an example in which an image of a component part is superimposed on an image of a structure including the part.

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner.

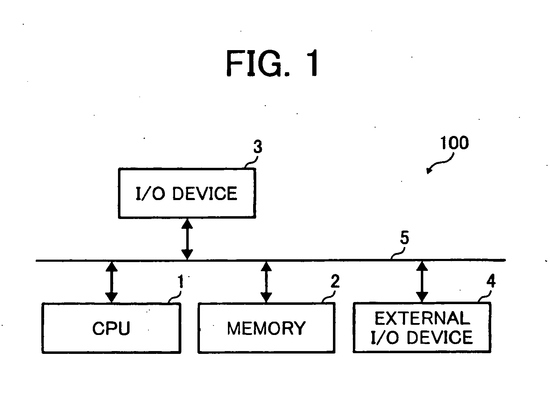

Referring now to the drawings, wherein like reference numerals designate identical or corresponding parts throughout the several views, particularly to FIG. 1, an example of a computer system configured by a program as an exemplary configuration of a part identification image processor 100 according to an embodiment of the present invention is described.

The part identification image processor 100 may include a CPU (central processing unit) 1, a memory 2, an input and output device (I/O device) 3, and an external input and output device (external I/O device) 4 that are connected via a bus 5 and exchange data with each other via the bus 5. The CPU 1 may process various data. The memory 2 may constitute a work area of the CPU 1 and store various programs, data, etc. A user may input data to and output data from the part identification image processor 100 with the input and output device 3. The part identification image processor 100 may exchange data with an external device by using the external I/O device 4.

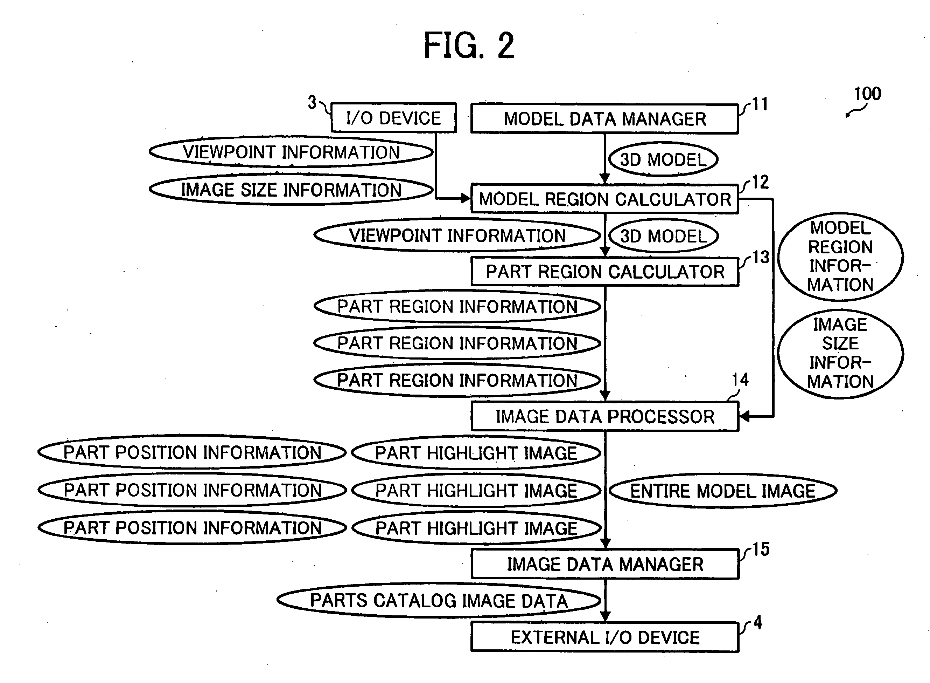

FIG. 2 illustrates an example of a computer system configured by a program as an exemplary configuration of the part identification image processor 100. The part identification image processor 100 may include a model data manager 11, a model region calculator 12, a part region calculator 13, an image data processor 14, and an image data manager 15.

The model data manager 11 manages data of a preliminary prepared 3D model. The model region calculator 12 receives visual point information and image size information via the I/O device 3. The model region calculator 12 projects a shape of the 3D model in a direction designated by the visual point information and computes model region information of the 3D model that encloses the projected image of the 3D model with an aspect ratio designated by the image size information.

The part region calculator 13 projects a shape of each part included in the 3D model in a direction designated by the visual point information and computes part region information enclosing the projected image of the part.

The image data processor 14 cuts an entire model image from an image in which the 3D model is projected entirely according to the model region information. The image data processor 14 cuts a part highlight image according to the part region information from a projection image of the entire 3D model in which a part constituting the 3D model is highlighted. The image data processor 14 obtains part position information specifying a location of the part highlight image in the entire model image.

The image data management part 15 manages the entire model image, the part highlight image, and part position information as image data for a parts catalog. The image data management part 15 may output the image data for the parts catalog to the external device via the external I/O device 4.

Operations of the part identification image processor 100 are described below.

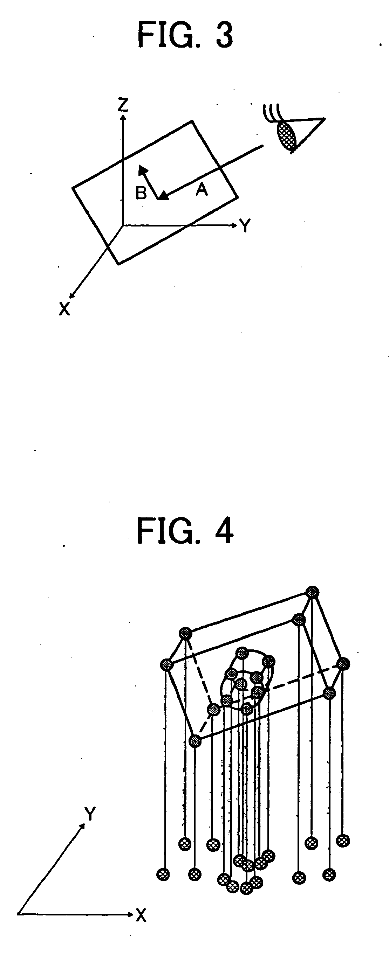

The model data manager 11 transfers the data of the preliminary prepared 3D model in which a plurality of parts are assembled to the model region calculator 12. The model region calculator 12 receives the visual point information and the image size information from the I/O device 3. As illustrated in FIG. 3, the visual point information includes a sight line vector A and a view-up vector B.

The sight line vector A is a vector to indicate a direction of a sight line in a 3D space and is used to specify a direction of a parallel projection of a 3D model. The view-up vector B is a vector to indicate an upward direction with respect to the sight line in the 3D space and is at right angle to the sight line vector A. The view-up vector B is in parallel to a projection plane of the parallel projection of the 3D model.

The image size information is specified by pixel counts in a crosswise direction (W) and a vertical direction (H).

The model region calculator 12 generates a parallel projection of the 3D model in the sight line vector received as above and obtains the model region information as a rectangular region which contains the projection of the 3D model on the projection plane. The model region calculator 12 transmits the model region information to the image data processor 14. The aspect ratio of the rectangular region is equal or similar to an aspect ratio (W/H) of the image size information. The rectangular region designates the projection plane in a X-Y rectangular coordinate system whose Y axis is in the direction of the view-up vector.

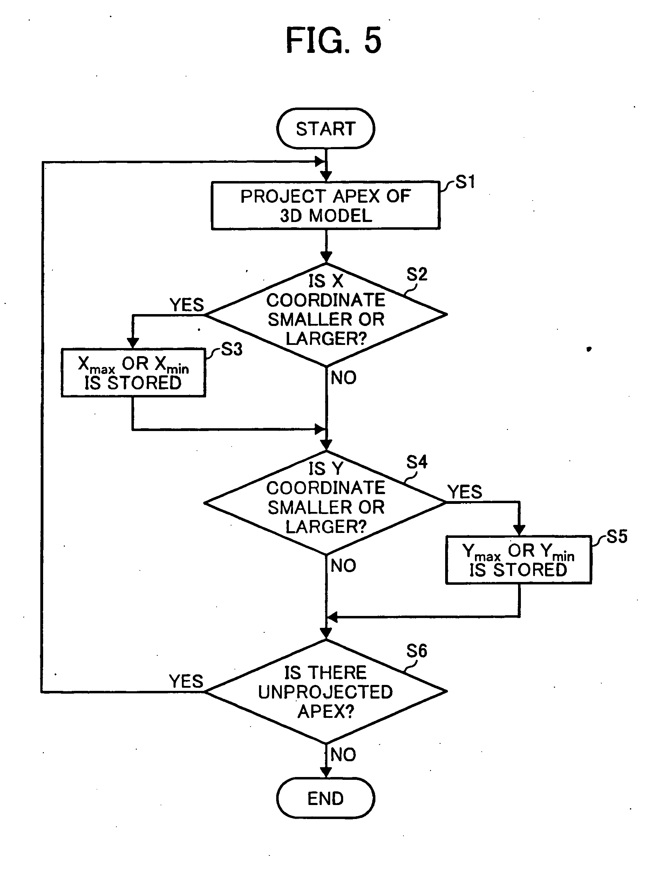

The rectangular region is evaluated as described below, referring to FIGs. 4 and 5. As illustrated in FIG. 4, all apexes defining the shape of the 3D model are projected on the projection plane. X-coordinates and Y-coordinates of the apexes are evaluated.

FIG. 5 is a flowchart of a procedure to obtain a combination of smallest X-coordinate and Y-coordinate that is referred to as $(X_{min}, Y_{min})$ and a combination of largest X-coordinate and Y-coordinate that is referred to as $(X_{max}, Y_{max})$. In FIG. 5, the model region calculator 12 projects one of the apexes defining the shape of the 3D model on the projection plane at S1.

At S2, the model region calculator 12 determines whether or not an X-coordinate of the apex is smaller or larger than an X-coordinate of any other apex projected. When the X-coordinate is smaller or larger than the X-coordinate of any other apex projected (YES at S2), the model region calculator 12 stores the X-coordinate as an $X_{min}$ or $X_{max}$ at S3.

When the X-coordinate is not smaller or larger than the X-coordinate of any other apex projected (NO at S2), the model region calculator 12 determines whether or not a Y-coordinate of the apex is smaller or larger than a Y-coordinate of any other apex projected at S4. When the Y-coordinate is smaller or larger than the Y-coordinate of any other apex projected (YES at S4), the model region calculator 12 stores the X-coordinate as an $Y_{min}$ or $Y_{max}$ at S5.

At S6, the model region calculator 12 checks whether or not there is an apex that remains unprojected in the apexes of the 3D model. When there is an apex that is not projected (YES at S6), the model region calculator 12 repeats the procedure from S1. When all the apexes are projected (NO at S6), the model region calculator 12 completes the procedure.

The model region calculator 12 evaluates a smallest coordinate value $(SX_{min}, SY_{min})$ and a largest coordinate value $(SX_{max}, SY_{max})$ of the rectangular region as described below. The aspect ratio (W/H) of the image size is defined

as $\alpha$.

When

$$X_{max} - X_{min} >= Y_{max} - Y_{min},$$

$$SX_{min} = X_{min}$$

$$SX_{max} = X_{max}$$

$$SY_{min} = (Y_{max} - Y_{min})/2 - \alpha(X_{max} - X_{min})/2$$

$$SY_{max} = (Y_{max} - Y_{min})/2 + \alpha(X_{max} - X_{min})/2.$$

When

$$X_{max} - X_{min} < Y_{max} - Y_{min},$$

$$SX_{min} = (X_{max} - X_{min})/2 - (Y_{max} - Y_{min})/2\alpha$$

$$SX_{max} = (X_{max} - X_{min})/2 + (Y_{max} - Y_{min})/2\alpha$$

$$SY_{min} = Y_{min}$$

$$SY_{max} = Y_{max}.$$

The model region calculator 12 transmits the data of the 3D model and the visual point information to the part region calculator 13 and the image size information to the image data processor 14.

The part region calculator 13 generates a parallel projection of each part included in the 3D model in the direction of the sight line vector received as above and obtains the part region information as smallest rectangular regions each of which contains the projection of the part on the projection plane. The part region calculator 13 transmits the part region information to the image data processor 14.

The part region information (rectangular region) designates the projection plane in the X-Y rectangular coordinate system and is evaluated as described below.

All apexes defining a shape of each part are projected on the projection plane. X-coordinates and Y-coordinates of the apexes are evaluated. The part region calculator 13 obtains a combination of smallest X-coordinate and Y-coordinate that is referred to as ($PX_{min}$, $PY_{min}$) and a combination of largest X-coordinate and Y-coordinate that is referred to as ($PX_{max}$, $PY_{max}$) for each part in the 3D model. The model region calculator 13 determines the combinations of the smallest X and Y coordinates and the largest X and Y coordinates as a smallest coordinate value and a largest coordinate value of the rectangular region of the part, respectively.

The part region calculator 13 transmits the data of the 3D model and the visual point information to the image data processor 14.

The image data processor 14 generates an entire model image as follows: For example, a parallel projection image is generated by projecting the data of the 3D model in the direction of the sight line vector. The image data processor 14 cuts the parallel projection image along the model region information (rectangular region) and generates the entire model image as image data in the pixel counts according to the image size information. The image data processor 14 transmits the entire model image to the image data manager 15.

The image data processor 14 generates part highlight images as follows: For example, a parallel projection image of the 3D model in which a part is highlighted is generated for each part included in the 3D model. The image data processor 14 cuts the parallel projection image along the part region information (rectangular region) of the part. The image data generator 14 generates the part highlight image as image data in pixel counts in the crosswise and vertical directions according to the image size information, the model region information, and the part region information. The image data generator 14 transmits the part highlight images to the image data manager 15.

The pixel count in the crosswise direction is computed by

$$(PX_{max} - PX_{min}) / ((SX_{max} - SX_{min}) / W),$$

wherein W is the pixel count in the crosswise direction.

The pixel count in the vertical direction is computed by

$$(PY_{max} - PY_{min}) / ((SY_{max} - SY_{min}) / H),$$

wherein H is the pixel count in the vertical direction.

The image data processor 14 determines a position of the image data of the each part in the entire model image. The image data processor 14 transmits the position as part position information to the image data manager 15.

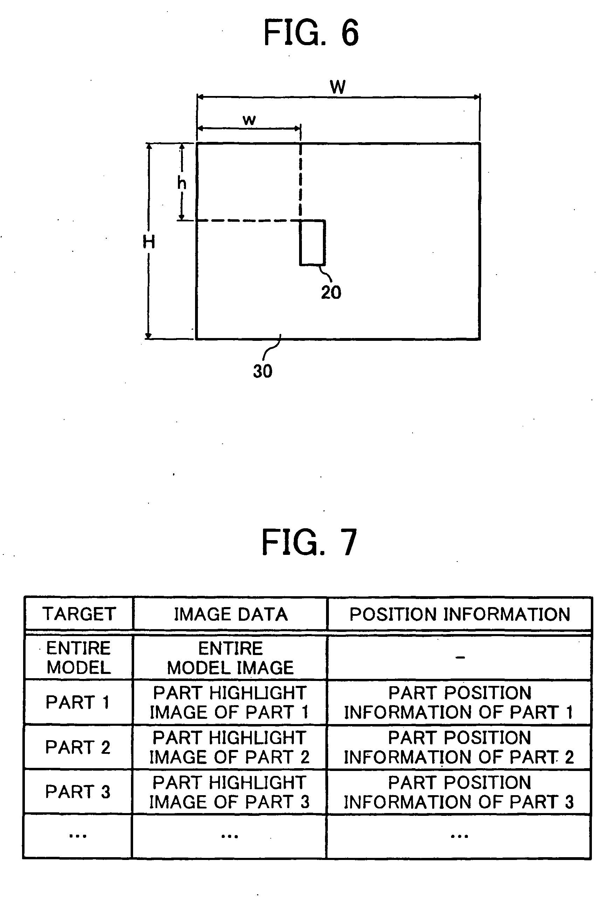

The part position information is described, referring to FIG. 6. As illustrated in FIG. 6, the part position information designates a position of an upper left apex of a part highlight image 20 with a pixel count w in the crosswise direction and a pixel count h in the vertical direction in an coordinate system whose origin is an upper left apex of a pixel region of an entire model image 30.

The pixel count w of each part is evaluated by

$$w = W(PX_{min} - SX_{min}) / SX_{max} - SX_{min},$$

wherein W is the pixel count in the crosswise direction.

The pixel count h of each part is evaluated by

$$h = H(SY_{min} - PY_{min}) / SY_{max} - SY_{min},$$

wherein H is the pixel count in the vertical direction.

The image data manager 15 compiles the entire model image, part highlight images, and part position information, for example, into a view format data structure illustrated in FIG. 7 as the image data for the parts catalog and outputs the image data to the external I/O device 4. The image data manager 15 stores and manages the image data for the parts catalog.

Therefore, the image of an arbitrary part in the 3D model may be superimposed on the image data of the entire model according to the position information of the part.

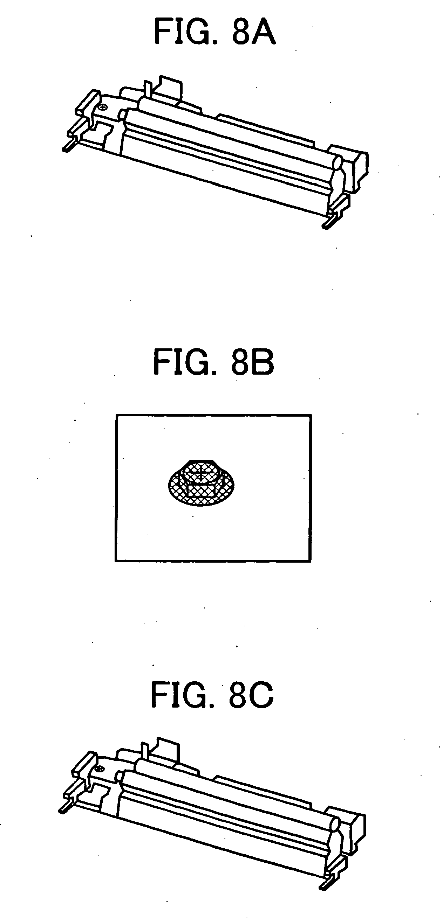

FIG. 8A is an illustration of an entire model image of a structure including a plurality of component parts. FIG. 8B is a part highlight image of a component part of the structure. The component part is highlighted in a darker color (e.g., red) than a color of the entire model image. FIG. 8C is an example in which the part highlight image is superimposed on the entire model image.

As described above, an arbitrary component of a product is recognizable in an entire model in which components thereof are assembled. Further, the arbitrary component may be identified in the entire model by a specified image size.

The arbitrary component may be identified by superimposing a part highlight image thereof on the entire model based on the part position information thereof. Further, an external I/O device may require less capacity to store the images to identify respective component parts compared with a case in which images of the respective component parts are stored in an image size equal or similar to an image size of the entire model image.

Further, the arbitrary component may be identified with a two-dimensional image thereof in the entire model image. A workload required to identify the arbitrary component by the two-dimensional image may be lighter than a case in which the component is identified by the 3D model. Therefore, a data processor or computer having a lower performance is workable.

In an embodiment, a program may include instructions to configure a computer system as a part identification image processor 100. The program may be stored in a computer-readable recording medium, which may or may not be removable.

**Claims**

1. A part identification image processor, comprising:

   a model manager (11) configured to manage data of a prepared 3D model constituted by a plurality of parts;
   a model region calculator (12) configured to project the 3D model in a direction specified by visual point information received via an input device to generate a 2D projection image thereof and to compute a model region information, enclosing the projection image of the 3D model with an aspect ratio specified by image size information received via the input device;
   a part region calculator (13) configured to project each part constituting the 3D model in the direction specified by the visual point information to generate a 2D projection image thereof and to compute part region information, enclosing the projection image of the part;
   an image data processor (14) configured to cut an entire model image according to the model region information from the projection image of the 3D model, to cut a part highlight image according to the part region information from a 2D projection image of the 3D model in which a part is highlighted, and to compute part position information specifying a location of the part highlight image in the entire model image; and
   an image data manager (13) configured to store and manage the entire model 2D image, the part highlight 2D image, and the part position information as image data for a parts catalog so that on receipt of user input identifying a part, a 2D image of the 3D model can be prepared by superimposing the respective part highlight image on the entire model image, with reference to the part position information.

2. The part identification image processor according to Claim 1, wherein the model region calculator (12) is configured to:

   project all apexes defining a shape of the 3D model on a projection plane defined by an X-Y rectangular coordinate system;
   obtain a rectangular region defined by a smallest X coordinate, a smallest Y coordinate, a largest X coordinate, and a largest Y coordinate among coordinates of the apexes; and
   determine the model region information by enlarging the rectangular region in an X axis direction or a Y axis direction thereof in proportion to the aspect ratio specified by image size information.

3. The part identification image processor according to Claim 1, wherein the part region calculator (13) is configured to:

   project all apexes defining a shape of the part on a projection plane defined by an X-Y rectangular coordinate system;
   obtain a rectangular region defined by a smallest X coordinate, a smallest Y coordinate, a largest X coordinate, and a largest Y coordinate among coordinates of the apexes; and
   determine the rectangular region as the part region information.

4. The part identification image processor according to Claim 1, 2 or 3
   wherein the image data processor is configured to:

   cut an image from the projection image of the 3D model based on the model region information to generate the entire model image in a pixel count according to the image size information;
   generate the projection image of the 3D model in which the part is highlighted for each part constituting the 3D model and cuts the image of the part based on the part region information;

generate the part highlight image in a pixel count computed based on the model region information and the part region information; and

compute part position information specifying a position of the part highlight image in the entire model image based on the model region information and the part region information.

5. The part identification image processor according to Claim 1, 2, 3 or 4 wherein the image data manager (15) is configured to output the entire model image, the part highlight image, and the part position information in a view format data structure to an external input and output device (4).

6. A computer program comprising program code means that, when executed by a computer system (100), provides the part identification image processor of any one of Claims 1 to 5.

7. A storage medium containing a computer program system, comprising program code means that, when executed by a computer system (100), provides the part identification image processor of any one of Claims 1 to 5.

8. The storage medium according to Claim 7, wherein the storage medium is a recording medium insertable into the computer system.

9. A computer-implemented method of generating a parts catalog, comprising:

receiving data of a 3D model constituted by a plurality of parts;

projecting the 3D model in a direction specified by visual point information received via an input device to generate a 2D projection image thereof;

computing model region information, enclosing the projection image of the 3D model with an aspect ratio specified by image size information received via the input device;

projecting each part constituting the 3D model in the direction specified by the visual point information to generate a 2D projection image thereof and to compute part region information, enclosing the projection image of the part;

dividing the entire model image according to the model region information from the projection image of the 3D model, to divide a part highlight image according to the part region information form a projection image of the 3D model in which a part is highlighted, and to compute part position information specifying a location of the part highlight image in the entire model image; and

storing and managing the entire model 2D image, the part highlight 2D image, and part position information as image data for a parts catalog; so that on receipt of user input identifying a part, an image of the 3D model can be prepared by superimposing the respective part highlight image on the entire model image with reference to the part position information.

## Patentansprüche

1. Teileidentifikationsbildverarbeitungseinheit, die umfasst:

einen Modellmanager (11), der konfiguriert ist, Daten eines erstellten 3D-Modells, das aus mehreren Teilen besteht, zu managen;

eine Modellbereichsrecheneinheit (12), die konfiguriert ist, das 3D-Modell in eine durch über eine Eingabevorrichtung empfangene visuelle Punktinformationen spezifizierte Richtung zu projizieren, um sein 2D-Projektionsbild zu erzeugen, und Modellbereichsinformationen zu berechnen, die das Projektionsbild des 3D-Modells mit einem durch über die Eingabevorrichtung empfangene Bildgrößeninformationen spezifizierten Seitenverhältnis einschließen;

eine Teilbereichsrecheneinheit (13), die konfiguriert ist, jeden Teil, der das 3D-Modell ausmacht, in die durch die visuellen Punktinformationen spezifizierte Richtung zu projizieren, um ein 2D-Projektionsbild davon zu erzeugen, und Teilbereichsinformationen zu berechnen, die das Projektionsbild des Teils einschließen;

eine Bilddatenverarbeitungseinheit (14), die konfiguriert ist, ein gesamtes Modellbild gemäß den Modellbereichsinformationen aus dem Projektionsbild des 3D-Modells zu schneiden, ein Teilglanzlichtbild gemäß den Teilbereichsinformationen aus einem 2D-Projektionsbild des 3D-Modells, in dem ein Teil hervorgehoben ist, zu schneiden, und Teilpositionsinformationen zu berechnen, die einen Ort des Teilglanzlichtbildes in dem gesamten Modellbild spezifizieren; und

einen Bilddatenmanager (13), der konfiguriert ist, das gesamte Modell-2D-Bild, das Teilglanzlicht-2D-Bild und die Teilpositionsinformationen als Bilddaten für einen Teilekatalog zu speichern und zu managen, so dass bei Empfang einer Anwendereingabe, die einen Teil identifiziert, ein 2D-Bild des 3D-Modells durch Überlagern des entsprechenden Teilglanzlichtbildes mit dem gesamten Modellbildes in Bezug auf die Teilpositionsinformationen erstellt werden kann.

2. Teileidentifikationsbildverarbeitungseinheit nach Anspruch 1, wobei die Modellbereichsrecheneinheit (12) konfiguriert ist,
alle Scheitelpunkte, die eine Form des 3D-Modells definieren, auf eine Projektionsebene, die durch ein rechtwinkliges X-Y-Koordinatensystem definiert ist, zu projizieren;
einen rechteckigen Bereich, der durch eine kleinste X-Koordinate, eine kleinste Y-Koordinate, eine größte X-Koordinate und eine größte Y-Koordinate unter den Koordinaten der Scheitelpunkte definiert ist, zu erhalten; und
die Modellbereichsinformationen durch Vergrößern des rechteckigen Bereichs in seiner X-Achsenrichtung oder seiner Y-Achsenrichtung im Verhältnis zu dem durch die Bildgrößeninformationen spezifizierten Seitenverhältnis zu bestimmen.

3. Teileidentifikationsbildverarbeitungseinheit nach Anspruch 1, wobei die Teilebereichsrecheneinheit (13) konfiguriert ist:

alle Scheitelpunkte, die eine Form des Teils definieren, auf einer Projektionsebene, die durch ein rechtwinkliges X-Y-Koordinatensystem definiert ist, zu projizieren;
einen rechteckigen Bereich, der durch eine kleinste X-Koordinate, eine kleinste Y-Koordinate, eine größte X-Koordinate und eine größte Y-Koordinate unter den Koordinaten der Scheitelpunkte definiert ist, zu erhalten;
den rechteckigen Bereich als die Teilbereichsinformationen zu bestimmen.

4. Teileidentifikationsbildverarbeitungseinheit nach Anspruch 1, 2 oder 3, wobei die Bilddatenverarbeitungseinheit konfiguriert ist,
ein Bild aus dem Projektionsbild des 3D-Modells aufgrund der Modellbereichsinformationen auszuschneiden, um das gesamte Modellbild in einer Pixelanzahl gemäß den Bildgrößeninformationen zu erzeugen;
das Projektionsbild des 3D-Modells, in dem der Teil hervorgehoben ist für jeden Teil, der das 3D-Modell ausmacht, zu erzeugen und das Bild des Teils aufgrund der Teilbereichsinformationen auszuschneiden;
das Teilglanzlichtbild in einer Pixelanzahl, die aufgrund der Modellbereichsinformationen und der Teilbereichsinformationen berechnet wurde, zu erzeugen; und
Teilepositionsinformationen, die eine Position des Teilglanzlichtbildes in dem gesamten Modellbild spezifizieren, aufgrund der Modellbereichsinformationen und der Teilbereichsinformationen zu berechnen.

5. Teileidentifikationsbildverarbeitungseinheit nach Anspruch 1, 2, 3 oder 4, wobei der Bilddatenmanager (15) konfiguriert ist, das gesamte Modellbild, das Teilglanzlichtbild und die Teilpositionsinformationen in einer Sichtformatdatenstruktur an eine externe Eingabe- und Ausgabevorrichtung (4) auszugeben.

6. Computerprogramm, das Programmcodemittel umfasst, die, wenn sie durch ein Computersystem (100) ausgeführt werden, die Teileidentifikationsbildverarbeitungseinheit nach einem der Ansprüche 1 bis 5 liefern.

7. Speichermedium, das ein Computerprogrammsystem enthält, das Programmcodemittel umfasst, die, wenn sie durch ein Computersystem (100) ausgeführt werden, die Teileidentifikationsbildverarbeitungseinheit nach einem der Ansprüche 1 bis 5 liefern.

8. Speichermedium nach Anspruch 7, wobei das Speichermedium ein Aufzeichnungsmedium ist, das in das Computersystem einführbar ist.

9. Computerimplementiertes Verfahren zum Erzeugen eines Teilekatalogs, das umfasst:

Empfangen von Daten eines 3D-Modells, das aus mehreren Teilen besteht;
Projizieren des 3D-Modells in eine durch über eine Eingabevorrichtung empfangene visuelle Punktinformationen spezifizierte Richtung, um sein 2D-Projektionsbild zu erzeugen;
Berechnen von Modellbereichsinformationen, die das Projektionsbild des 3D-Modells mit einem durch über die Eingabevorrichtung empfangene Bildgrößeninformationen spezifizierten Seitenverhältnis einschließen;
Projizieren eines jeden Teils, der das 3D-Modell ausmacht, in die durch die visuellen Punktinformationen spezifizierte Richtung, um sein 2D-Projektionsbild zu erzeugen, und Teilbereichsinformationen zu berechnen, die das Projektionsbild des Teils einschließen;

**EP 1 898 327 B1**

Trennen des gesamten Modellbildes gemäß den Modellbereichsinformationen von dem Projektionsbild des 3D-Modells, um ein Teilglanzlichtbild gemäß den Teilbereichsinformationen von einem Projektionsbild des 3D-Modells, in dem ein Teil hervorgehoben ist, zu trennen und Teilpositionsinformationen, die einen Ort des Teilglanzlichtbildes in dem gesamten Modellbild spezifizieren, zu berechnen; und

Speichern und Managen des gesamten Modell-2D-Bildes, des Teilglanzlicht-2D-Bildes und Teilpositionsinformationen als Bilddaten für einen Teilekatalog; so dass bei Empfang einer Anwendereingabe, die ein Teil identifiziert, ein Bild des 3D-Modells durch Überlagern des entsprechenden Teilglanzlichtbildes und mit dem gesamten Modellbild in Bezug auf die Teilpositionsinformationen erstellt werden kann.

**Revendications**

1. Processeur d'image d'identification de partie, comprenant :

   un gestionnaire de modèle (11) configuré pour gérer les données d'un modèle tridimensionnel préparé constitué d'une pluralité de parties ;
   un calculateur de région de modèle (12) configuré pour projeter le modèle tridimensionnel dans une direction spécifiée par des informations de point d'observation reçues par l'intermédiaire d'un dispositif d'entrée pour générer une image de projection bidimensionnelle de celui-ci et pour calculer des informations de région de modèle, entourant l'image de projection du modèle tridimensionnel avec un rapport d'aspect spécifié par des informations de format d'image reçues par l'intermédiaire du dispositif d'entrée ;
   un calculateur de région de partie (13) configuré pour projeter chaque partie constituant le modèle tridimensionnel dans la direction spécifiée par les informations de point d'observation pour générer une image de projection bidimensionnelle de celui-ci et pour calculer des informations de région de partie, entourant l'image de projection de la partie ;
   un processeur de données d'image (14) configuré pour découper une image de modèle entière conformément aux informations de région de modèle provenant de l'image de projection du modèle tridimensionnel, pour découper une image de mise en évidence de partie conformément aux informations de région de partie provenant d'une image de projection bidimensionnelle du modèle tridimensionnel dans laquelle une partie est mise en évidence, et pour calculer des informations de position de partie spécifiant un emplacement de l'image de mise en évidence de partie dans l'image de modèle entière ; et
   un gestionnaire de données d'image (13) configuré pour mémoriser et gérer l'image bidimensionnelle de modèle entière, l'image bidimensionnelle de mise en évidence de partie et les informations de position de partie en tant que données d'image pour un catalogue de parties de sorte que, lors de la réception d'une entrée d'utilisateur identifiant une partie, une image bidimensionnelle du modèle tridimensionnel puisse être préparée en superposant l'image de mise en évidence de partie respective sur l'image de modèle entière, avec référence aux informations de position de partie.

2. Processeur d'image d'identification de partie selon la revendication 1, dans lequel le calculateur de région de modèle (12) est configuré pour :

   projeter tous les sommets définissant une forme du modèle tridimensionnel sur un plan de projection défini par un système de coordonnées orthogonales X-Y ;
   obtenir une région rectangulaire définie par la coordonnée X la plus petite, la coordonnée Y la plus petite, la coordonnée X la plus grande et la coordonnée Y la plus grande parmi les coordonnées des sommets ; et
   déterminer les informations de région de modèle en agrandissant la région rectangulaire dans une direction d'axe X ou une direction d'axe Y de celle-ci proportionnellement au rapport d'aspect spécifié par les informations de format d'image.

3. Processeur d'image d'identification de partie selon la revendication 1, dans lequel le calculateur de région de partie (13) est configuré pour :

   projeter tous les sommets définissant une forme de la partie sur un plan de projection défini par un système de coordonnées orthogonales X-Y ;
   obtenir une région rectangulaire définie par la coordonnée X la plus petite, la coordonnée Y la plus petite, la coordonnée X la plus grande et la coordonnée Y la plus grande parmi les coordonnées des sommets ; et
   déterminer la région rectangulaire en tant qu'informations de région de partie.

9

**4.** Processeur d'image d'identification de partie selon la revendication 1, 2 ou 3, dans lequel le processeur de données d'image est configuré pour :

découper une image à partir de l'image de projection du modèle tridimensionnel sur la base des informations de région de modèle pour générer l'image de modèle entière avec un compte de pixels conformément aux informations de format d'image ;

générer l'image de projection du modèle tridimensionnel dans laquelle la partie est mise en évidence pour chaque partie constituant le modèle tridimensionnel et découper l'image de la partie sur la base des informations de région de partie ;

générer l'image de mise en évidence de partie avec un compte de pixels calculé sur la base des informations de région de modèle et des informations de région de partie ; et

calculer des informations de position de partie spécifiant une position de l'image de mise en évidence de partie dans l'image de modèle entière sur la base des informations de région de modèle et des informations de région de partie.

**5.** Processeur d'image d'identification de partie selon la revendication 1, 2, 3 ou 4, dans lequel le gestionnaire de données d'image (15) est configuré pour délivrer l'image de modèle entière, l'image de mise en évidence de partie, les informations de position de partie dans une structure de données de format d'observation à un dispositif d'entrée et de sortie externe (4).

**6.** Programme d'ordinateur comprenant des moyens formant code de programme qui, lorsqu'ils sont exécutés par un système informatique (100), réalisent le processeur d'image d'identification de partie selon l'une quelconque des revendications 1 à 5.

**7.** Support de mémorisation contenant un système de programme d'ordinateur, comprenant des moyens formant code de programme qui, lorsqu'ils sont exécutés par un système informatique (100), réalisent le processeur d'image d'identification de partie selon l'une quelconque des revendications 1 à 5.

**8.** Support de mémorisation selon la revendication 7, dans lequel le support de mémorisation est un support d'enregistrement insérable dans le système informatique.

**9.** Procédé mis en oeuvre par un ordinateur pour générer un catalogue de parties comprenant :

la réception de données d'un modèle tridimensionnel constitué d'une pluralité de parties ;

la projection du modèle tridimensionnel dans une direction spécifiée par des informations de point d'observation reçues par l'intermédiaire d'un dispositif d'entrée pour générer une image de projection bidimensionnelle de celui-ci ;

le calcul d'informations de région de modèle, entourant l'image de projection du modèle tridimensionnel avec un rapport d'aspect spécifié par des informations de format d'image reçues par l'intermédiaire du dispositif d'entrée ;

la projection de chaque partie constituant le modèle tridimensionnel dans la direction spécifiée par les informations de point d'observation pour générer une image de projection bidimensionnelle de celui-ci et pour calculer des informations de région de partie, entourant l'image de projection de la partie ;

la division de l'image de modèle entière conformément aux informations de région de modèle provenant de l'image de projection du modèle tridimensionnel, pour diviser une image de mise en évidence de partie conformément aux informations de région de partie provenant de l'image de projection du modèle tridimensionnel dans laquelle une partie est mise en évidence, et pour calculer des informations de position de partie spécifiant un emplacement de l'image de mise en évidence de partie dans l'image de modèle entière ; et

la mémorisation et la gestion de l'image bidimensionnelle de modèle entière, de l'image bidimensionnelle de mise en évidence de partie et des informations de position de partie en tant que données d'image pour un catalogue de parties, de sorte que, lors de la réception d'une entrée d'utilisateur identifiant une partie, une image du modèle tridimensionnel puisse être préparée en superposant l'image de mise en évidence de partie respective sur l'image de modèle entière avec référence aux informations de position de partie.

# FIG. 1

# FIG. 2

I/O DEVICE (3) — MODEL DATA MANAGER (11) — 100

VIEWPOINT INFORMATION

3D MODEL

IMAGE SIZE INFORMATION → MODEL REGION CALCULATOR (12)

VIEWPOINT INFORMATION — 3D MODEL

PART REGION CALCULATOR (13)

MODEL REGION INFORMATION

PART REGION INFORMATION

PART REGION INFORMATION

PART REGION INFORMATION

IMAGE SIZE INFORMATION

IMAGE DATA PROCESSOR (14)

PART POSITION INFORMATION — PART HIGHLIGHT IMAGE

PART POSITION INFORMATION — PART HIGHLIGHT IMAGE — ENTIRE MODEL IMAGE

PART POSITION INFORMATION — PART HIGHLIGHT IMAGE

IMAGE DATA MANAGER (15)

PARTS CATALOG IMAGE DATA

EXTERNAL I/O DEVICE (4)

EP 1 898 327 B1

# FIG. 3

# FIG. 4

# FIG. 5

```
                    ┌─────────────┐
                    │    START    │
                    └──────┬──────┘
                           │
         ┌─────────────────▼──────────────┐
         │      ┌──────────────────────┐  ┐ S1
         │      │  PROJECT APEX OF      │  │
         │      │     3D MODEL          │  │
         │      └───────────┬──────────┘
         │                  │
         │            ◇ IS X            S2
         │      YES  COORDINATE
         │   ◄─────  SMALLER OR
         │           LARGER?  ◇
         │  ┌──────────────┐ S3    │ NO
         │  │ Xmax OR Xmin │       │
         │  │  IS STORED   │       │
         │  └──────┬───────┘       │
         │         └───────────────►
         │                  │
         │            ◇ IS Y           S4
         │           COORDINATE   YES
         │           SMALLER OR  ─────►
         │           LARGER? ◇         ┌──────────────┐ S5
         │                  │ NO       │ Ymax OR Ymin │
         │                  │          │  IS STORED   │
         │                  │          └──────┬───────┘
         │                  ◄─────────────────┘
         │                  │
         │            ◇ IS THERE       S6
         │      YES   UNPROJECTED
         └──────────  APEX? ◇
                           │ NO
                    ┌──────▼──────┐
                    │     END     │
                    └─────────────┘
```

## FIG. 6

## FIG. 7

| TARGET | IMAGE DATA | POSITION INFORMATION |
|---|---|---|
| ENTIRE MODEL | ENTIRE MODEL IMAGE | - |
| PART 1 | PART HIGHLIGHT IMAGE OF PART 1 | PART POSITION INFORMATION OF PART 1 |
| PART 2 | PART HIGHLIGHT IMAGE OF PART 2 | PART POSITION INFORMATION OF PART 2 |
| PART 3 | PART HIGHLIGHT IMAGE OF PART 3 | PART POSITION INFORMATION OF PART 3 |
| ... | ... | ... |

15

## FIG. 8A

## FIG. 8B

## FIG. 8C

**EP 1 898 327 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1304657 A2
- FR 2712999 A1
- EP 1742181 A2
- EP 1821253 A